# EUROPEAN PATENT SPECIFICATION

(11) **EP 1 956 928 B1**
(45) Date of publication and mention of the grant of the patent: **23.06.2010**
(21) Application number: 06842400.1
(22) Date of filing: 08.12.2006
(51) Int. Cl.: A23L 2/56, A23L 2/38, A23L 2/385, A23L 1/0524, B01F 17/00

(54) **STABILISED EMULSION**
STABILISIERTE EMULSION
EMULSION STABILISEE

(30) Priority: 09.12.2005 US 748589 P
(43) Date of publication of application: 20.08.2008
(73) Proprietor: DANISCO A/S, 1001 Copenhagen K. (DK)
(72) Inventor: VAN BOKKELEN, Reginald, B-1420 Braine-L'Alleud (BE); FALLESEN, Bjarne, DK-4900 Nakskov (DK)
(74) Representative: Alcock, David
(86) International application number: PCT/IB2006/004016
(87) International publication number: WO 2007/066233

(56) References cited:
- WO-A-2005/048744
- GB-A- 1 118 019
- GB-A- 1 393 077
- US-A- 5 008 254

## Description

### Field of the Invention

The present invention relates to the oil phase for use in a beverage emulsion, beverage emulsions comprising such oil components, beverages comprising such emulsions, and processes for the preparation of such emulsions.

### Background

Beverage emulsions are a well-known class of foodstuff. They consist of a continuous aqueous phase in which a discontinuous oil phase is dispersed in the form of microscopic droplets. They are thus characterised as oil-in-water (O/W) emulsions. They typically have an opaque or cloudy appearance.

Beverages including beverage emulsions constitute a popular category of foodstuffs. Their usually cloudy appearance is associated by the consumer with that of natural fruit juice. Furthermore, the oil phase may comprise one or more lipophilic ingredients which would otherwise be immiscible in the beverage, such as flavour oils.

The formulation requirements placed upon such a beverage emulsion are very demanding. They must be stable, both as concentrate and diluted (i.e. finished) beverage, over a wide range of temperatures and storage conditions, whilst also being straightforward to formulate and incorporate into beverages.

Beverage emulsions are by their nature thermodynamically unstable and tend to break down on storage. The most common manifestations of beverage emulsion deterioration are "ringing" and "sedimentation". Ringing is the formation of a whitish ring around the neck of the container, whilst sedimentation is the precipitation of material at the bottom.

Two main approaches have been employed in an attempt to control beverage emulsion stability:
i. minimisation of the density contrast between the oil phase and the aqueous phase; and
ii. reduction of the droplet size of the dispersed (i.e. oil) phase.

The minimisation of the density contrast between the aqueous and the oil phase is achieved with the use of weighting agents. Such weighting agents are typically lipophilic components that serve to increase the density of the oil phase. Formerly, brominated vegetable oil was a widely employed weighting agent; however, this additive is not permitted in foodstuffs in several countries. Weighting agents more usually employed nowadays include SAIB (sucrose acetate isobutyrate) and ester gum (glycerol ester of wood rosin). Typically, the density of the oil phase is adjusted to 0.96 to 0.99 with SAIB or a mixture of SAIB and ester gum, or to 0.93 to 0.95 with ester gum.

Droplet size is normally controlled by means of a combination of the process employed to obtain the emulsion, and the nature of the emulsifier used. A homogenisation pressure of 15 to 30 MPa (150 to 300 bars) has been found to give good results in terms of emulsion stability.

Gum arabic is the emulsifier of choice in beverage emulsions However, gum arabic is a natural exudate gum produced by *Acacia senegal,* a shrub best suited to arid regions of Africa. Thus, its availability and price are subject to fluctuations in the political and climatic conditions in this region of the world.

Various potential replacements for gum arabic have been suggested, notably modified starch. However, they can adversely affect the flavour and mouthfeel of the beverage product, especially if relatively large quantities of emulsifier are required. When included in the beverage products at higher levels, some emulsifiers can additionally destabilize the beverage emulsion. In addition, many carbohydrate gums are relatively expensive.

Sugar beet pectin has been identified as a possible replacement for gum arabic in beverage emulsions. Sugar beet pectin is obtained from sugar beet pulp, and is available at an economically attractive price; it is a naturally occurring material, and is thus more widely accepted by consumers and regulatory authorities; and it imparts no unpleasant flavours or undesirable mouthfeel characteristics to formulated beverages.

### Prior Art

US 5,008,254 discloses pectins derived from high temperature, controlled hydrolytic aqueous extraction of spent sugar beet pulp, and their use as functional ingredients in comestibles. The pectins thus prepared are stated to have excellent properties in stabilising emulsions of citrus oils in water. A flavour oil emulsion is disclosed, comprising California orange oil adjusted to a density of 1.046 with brominated vegetable oil, together with an aqueous phase and a sugar beet pectin emulsifier.

Although the emulsions thus obtained are of comparable stability with emulsions employing gum arabic as emulsifier, after three months' storage, some gravitational sedimentation could be observed.

DE 4313549 discloses a process for obtaining pectin extract from sugar beet, omitting the otherwise customary stage of alcoholic precipitation. The obtained pectin is particularly suitable for the stabilisation of food emulsions.

US 6,663,717 B2 discloses a method of simultaneous purification and separation of pectin and pectic sugars / oligomers from sugar beet pulp. The obtained pectins are stated to be useful as emulsifiers.

Application note 0002082-02 (Copenhagen Pectin A/S, a division of Hercules Incorporated) discloses a beverage emulsion comprising; i) an oil phase consisting of orange oil weighted with ester gum 8BG blended to a density of 0.93; ii) water; and iii) GENU pectin type BETA. The ester gum is stated to retard the instability phenomenon known as Ostwald ripening.

Publication FA O 5.13.09-02 "Flavour Oil Emulsion with XPQ-EMP 3" (Degussa Texturant Systems) discloses the use of sugar beet pectin in the preparation of beverage emulsions. The oil phase in this emulsion comprises orange oil together with weighting agent.

Publication "GENU pectin type BETA for flavour oil emulsions" (CPK Kelco, Denmark, 1999) discloses GENU pectin type BETA (sugar beet pectin) as an emulsifier for use in flavour oil emulsions. Hercules ester gum 8BG is recommended as an oil phase weighting agent to avoid problems of creaming off.

Conference paper "Lecture of the Master Class on Emulsion Technology" held at FI Food Ingredients Europe, 3-5 November 1998, Frankfurt, Germany (Herbstreith & Fox) discloses oil in water emulsions employing sugar beet pectin as emulsifier. The oil phase comprises citrus oil weighted with ester gum to a density of 0.968 g/ml. The conclusion of this paper is that sugar beet pectin is unsuitable for emulsions comprising high amounts of oil.

J. Agric. Food Chem. 2005, 53, 3592-3597 discloses the emulsification properties of sugar beet pectin and its fractions. Ester gum and orange oil are mixed in a 1:1 ratio. Oil in water emulsions are prepared using 10 % ester gum / orange oil mixture and 0.5 to 5 % sugar beet pectin.

GB 1 118 019 discloses a method of emulsifying an essential oil in water, using sucrose esters only as weighting agents in order to raise the specific gravity of the resulting mixture.

US 6 086 938 discloses a process for the preparation of an emulsion concentrate for soft drinks whereby the aqueous phase comprises an extract of crushed defatted seeds from edible fruits. Sucrose acetate iso-butyrate (SAIB) and Ester gum are suggested as possible weighting agents. Ester gum and limonene are mixed in a 1:1 ratio.

EP 0 501 094 discloses a process for the production of a liquid concentrate based on essential oils whereby the density of the oily phase is increased the addition of dammar resin and the viscosity of the aqueous phase is increased by the addition of a thickening agent, such as pectin.

US 2004/0062845 discloses stabilisers for use in beverage emulsions whereby the stabiliser is a composition comprising modified starch and propylene glycol alginate. A mixture of flavour oil and Ester gum as a weighting agent is disclosed.

WO 03/096824 is concerned with the stabilisation of a dairy emulsion (butter oil-in-water). The emulsion is stabilised by the addition of high methoxy pectin and whey protein. The specific combination of whey protein and high methoxy pectin used in the aqueous phase provides advantageous emulsification and stabilisation of the lipophilic substance contained in the dispersed phase of the emulsion. The specific combination of whey protein and high methoxy pectin also limits the viscosity increase of the emulsion.

WO 2005/048744 relates to sucrose acetate iso-butyrate (SAIB) formulations useful in the beverage industry that have improved handling characteristics. Specifically, the sucrose acetate iso-butyrate (SAIB) formulations are solid. Ester gum is described as being problematic when used as a weighting agent, as its density is less than that of sucrose acetate iso-butyrate (SAIB) or brominated vegetable oil and too much ester gum may affect the taste of the final beverage.

EP 1 151 677 discloses a beverage emulsion containing an aqueous phase and a dispersed oil phase. A number of possible weighting agents are disclosed, including sucrose acetate iso-butyrate (SAIB), ester gum and dammar gum.

Int. Food Ingredients, (1995), No.1, 47-49 discloses the use of sucrose acetate iso-butyrate (SAIB) special grade to improve the stability of cloudy citrus beverages.

Int. Food Marketing and Technology, 2000, (June), 14(3), 6-8 discloses possible weighting agents used to increase the specific gravity of a flavouring oil. Such weighting agents include sucrose acetate iso-butyrate (SAIB), brominated vegetable oil and ester gum. Problems with brominated vegetable oil and ester gum are highlighted.

The inventors of the present invention have assessed the compositions of the prior art, and determined that while in most instances the concentrated formulations give somewhat stable beverage emulsions, when finished beverages are prepared, prominent whitish neck ring is often observed within 48 hours whenever manufactured under conditions mimicking those in a bottling plant.

A problem that the prior art does not solve is the provision of beverage emulsions employing sugar beet pectin as emulsifier having reduced phase separation on storage both as beverage emulsions and finished beverages.

A further problem that the prior art does not solve is the provision of beverage emulsions employing sugar beet pectin as emulsifier which can be stored at ambient or below ambient (i.e. below 20 °C) temperature without gelification and / or microbial contamination.

A further problem that the prior art does not solve is the provision of syrups for the preparation of beverage emulsions which do not precipitate flakes during manufacture.

A further problem that the prior art does not solve is the provision of beverage emulsions that show reduced flake formation upon addition to beverage syrups.

A further problem that the prior art does not solve is the provision of beverage emulsions that achieve stable and acceptable levels of cloudiness in finished beverages.

A further problem that the prior art does not solve is the provision of beverage emulsions that are compatible with current processing conditions at a bottling plant.

The present invention addresses one or more of the problems associated with the prior art.

### Summary of the Invention

According to a first aspect, there is provided an oil phase for the preparation of a stable beverage emulsion, said oil phase having a density of between 0.99 and 1.05 gcm⁻³ and a viscosity of between 10 and 1500 cP at 20 °C.

According to a second aspect, there is provided a beverage emulsion comprising:
i. an oil phase of the invention;
ii. an aqueous phase; and
iii. pectin.

According to a third aspect, there is provided a finished beverage comprising a beverage emulsion of the invention.

According to a fourth aspect, there is provided a process for the preparation of a beverage emulsion of the invention comprising the steps of:
bringing into association the constituents of the oil phase and the aqueous phase to form a mixture; and
homogenising the said mixture.

According to a fifth aspect, there is provided the use of sugar beet pectin as an emulsifier in a beverage emulsion comprising an oil phase of the invention and an aqueous phase.

### Detailed Description of the Invention

The present invention provides stable oil in water emulsions employing pectin as an emulsifier. A surprising finding of the invention is that in order to obtain oil in water emulsions which are stable towards long term storage both as concentrates and as finished (i.e. diluted) beverages, whilst utilising pectin as an emulsifier, it is necessary to employ an oil phase having different characteristics in terms of density and viscosity compared with those oil phases which may be successfully employed with other emulsifiers such as gum arabic or modified starch.

Specifically, it has been found that it is important to control the viscosity of the oil phase. Unless the viscosity is within the specified range, efficient homogenisation cannot be achieved.

Simultaneously, it has been found that it is important to control the density of the oil phase. In this respect, the oil phases of the prior art employed successfully in beverage emulsions wherein gum arabic or modified starch act as stabilisers do not give satisfactory results in the present compositions, using sugar beet pectin as emulsifier.

### Oil Phase

As used herein, the term "oil phase" refers to a composition which is substantially immiscible with an aqueous phase when present as the oil component of an oil-in-water emulsion.

The oil phase serves to impart desirable cloudiness or opacity to the formulated beverage emulsion. It also serves to hold one or more water-insoluble flavour components in emulsion (when the oil phase is present in such an emulsion).

Preferably, the oil phase comprises one or more of the group comprising: flavour oils, weighting agents, clouding agents, antioxidants, and pigments.

### Flavour Oils

The term "flavour oil" as used herein means any water-immiscible liquid that serves to impart flavour or aroma or both to the oil phase containing it.

Suitable flavours include: fruit flavours, such as guava, kiwi, peach, mango, papaya, pineapple, banana, strawberry, raspberry, blueberry, orange, grapefruit, tangerine, lemon, lime, lemon-lime, etc.; cola flavours; tea flavours; coffee flavours; chocolate flavours; dairy flavours; root beer and birch beer flavours, such as methyl salicylate (wintergreen oil, sweet birch oil). In citrus-flavoured beverage products the flavour oil typically contains several citrus oils of different types so that a well-balanced flavour is produced. Citrus oils may contain more than 90% by weight mono-terpenes and a smaller amount of sesqui-terpenes. Both are carriers of the oxygenated terpenoids, specifically the alcohols, aldehydes, ketones, acids, and esters, that are responsible for the characteristic aroma and flavour profile of the oil.

### Weighting Agents

The term "weighting agent" as used herein refers to a water immiscible component which is soluble or miscible in the oil phase as hereinbefore described, which has a density of greater than 1.00 gcm⁻³ at 20 °C.

Examples of weighting agents for adjusting the density of the oil phases of the invention include ester gum, damar gum, brominated vegetable oil (BVO) and sucrose acetate iso-butyrate (SAIB). The oil phase of the invention may comprise one or more than one weighting agent.

Ester gum is produced by esterification of pale wood rosin with food grade glycerol. Wood rosin, a solid resinous material found in the oleoresin of pine trees, contains about 90% by weight resin acids, primarily abietic acid and pimeric acid, and about 10% by weight non-acidic neutral components. Ester gum is prepared by esterification of the wood rosin with glycerol, which produces a mixture of mono-, di-, and triglycerides. After removal of the excess glycerine by vacuum distillation and steam sparging, the wood rosin typically has a specific gravity of about 1.08 at 25 °C. Currently, ester gum is approved by the United States and a number of other countries as a food additive.

Damar gum refers to a group of water-insoluble natural exudates from shrubs of the Genus *Dammar*, especially the *Caesalpinaceae* and *Dipterocarpacae* families, which are indigenous to Malaysia, Indonesia, and the East Indies. It is highly soluble in essential oils and is typically used as a weighting agent in cloud emulsions. Damar gum typically has a specific gravity of about 1.04 to 1.08 at 20 °C.

Brominated vegetable oil (BVO) refers to unsaturated vegetable oil that has been reacted with elemental bromine. Brominated vegetable oil typically has a specific gravity of 1.23 -1.33 at 20 °C.

Sucrose acetate isobutyrate (SAIB) is a mixture of sucrose esters containing about 2 mol of acetate and 6 mol of isobutyrate per mol of sucrose, primarily 6,6'-diacetyl-2,3,4,1', 3', 4'-hexa-isobutyryl sucrose. It is produced by esterification of sucrose with acetic anhydride. Sucrose acetate isobutyrate is a tasteless, odourless, and colourless viscous liquid with a specific gravity of about 1.146 at 20 °C.

Preferably, the oil phase of the invention comprises at least SAIB. More preferably, the oil phase comprises at least SAIB and another weighting agent. More preferably, the oil phase comprises at least SAIB and ester gum.

In a highly preferred embodiment, the oil phase of the invention comprises SAIB and ester gum as weighting agents. In this embodiment, it is preferred that the amount of ester gum present is below 50 % w/w based on the weight of the oil phase. More preferably, the amount of ester gum present is below 45 % w/w based on the weight of the oil phase. More preferably, the amount of ester gum present is below 40 % w/w based on the weight of the oil phase. More preferably, the amount of ester gum present is below 35 % w/w based on the weight of the oil phase.

Preferably, the amount of ester gum present is at least 10 % w/w based on the weight of the oil phase. More preferably, the amount of ester gum present is at least 15 % w/w based on the weight of the oil phase. More preferably, the amount of ester gum present is at least 20 % w/w based on the weight of the oil phase.

Preferably, the amount of ester gum is in a range between any of the preferred limits referred to above. More preferably, the ester gum is present in an amount between 20 and 50 % w/w based on the weight of the oil phase. More preferably, the ester gum is present in an amount between 20 and 40 % w/w based on the weight of the oil phase. More preferably, the ester gum is present in an amount between 20 and 35 % w/w based on the weight of the oil phase.

Preferably, the ratio of SAIB:ester gum in the oil phase is between 10:1 and 1:1 by weight (i.e. between 10 parts SAIB to 1 part ester gum, and 1 part SAIB to 1 part ester gum). More preferably, the ratio of SAIB:ester gum in the oil phase is between 10:1 and 2:1 by weight. More preferably, the ratio of SAIB:ester gum in the oil phase is between 6:1 and 2:1 by weight.

Preferably, brominated vegetable oil is present in amount of less than 20 % w/w based on the weight of the oil phase. More preferably, brominated vegetable oil is present in amount of less than 10 % w/w based on the weight of the oil phase. More preferably, brominated vegetable oil is present in amount of less than 5 % w/w based on the weight of the oil phase. More preferably, brominated vegetable oil is present in amount of less than 1 % w/w based on the weight of the oil phase. Most preferably, the oil phase comprises substantially no brominated vegetable oil.

### Clouding Agents

The term "clouding agent" as used herein refers to a water immiscible component which is soluble or miscible in the oil phase as defined above, which serves to increase the "cloudiness" or turbidity of the emulsion comprising said oil phase.

Preferred clouding agents include vegetable oils (such as rapeseed, peanut, corn, flaxseed, soybean, sunflower, cottonseed and combinations and blends thereof), partially and fully hydrogenated vegetable oils, and oil replacements such as esterified epoxide extended polyols (EEEPs).

### Antioxidant

The term "antioxidant" as used in this context refers to a water immiscible component which is soluble or miscible in the oil phase as defined above and serves to prevent the oxidation and / or rancidification of said oil phase.

Preferred antioxidants are tocopherols, butylated hydroxyanisole (BHA) and butylated hydroxytoluene (BHT).

### Other Components

As the skilled person will appreciate, the oil phase may include one or more other components which are immiscible with the aqueous phase but are miscible or soluble within the said oil phase, and serve to provide desirable functional characteristics to the oil phase, the beverage emulsion comprising said oil phase, or the finished beverage of the invention.

Other components include dyes, preservatives and vitamins.

### Viscosity

The term "viscosity" as used herein means the measure of the resistance of a fluid to deformation under shear stress. Viscosity is measured by a rotational viscometer. The viscometer employed is Viscometer Model LVF, Brookfield, USA, according to Protocol 1 below. Measurement is conducted at 20°C.

For the avoidance of doubt, term "viscosity of the oil phase" refers to the viscosity of the oil phase in isolation (i.e. not the viscosity when present in an emulsion).

Preferably, the viscosity of the oil phase is at least 20 cp. More preferably, the viscosity of the oil phase is at least 30 cp. More preferably, the viscosity of the oil phase is at least 40 cp. More preferably, the viscosity of the oil phase is at least 45 cp. More preferably, the viscosity of the oil phase is at least 50 cp. More preferably, the viscosity of the oil phase is at least 55 cp. More preferably, the viscosity of the oil phase is at least 60 cp.

Preferably the viscosity of the oil phase is below 1400 cp. More preferably, the viscosity of the oil phase is below 1350 cp. More preferably, the viscosity of the oil phase is below 1300 cp. More preferably, the viscosity of the oil phase is below 1250 cp. More preferably, the viscosity of the oil phase is below 1200 cp. More preferably, the viscosity of the oil phase is below 1150 cp. More preferably, the viscosity of the oil phase is below 1100 cp. More preferably, the viscosity of the oil phase is below 1050 cp. More preferably, the viscosity of the oil phase is below 1000 cp.

Preferably, the viscosity is in a range between any of the preferred limits referred to above. More preferably, the viscosity of the oil phase is between 50 and 1500 cp. More preferably, the viscosity of the oil phase is between 30 and 1000 cp. More preferably, the viscosity of the oil phase is between 50 and 1000 cp.

### Density

The term "density" as used herein refers to the mass per unit volume of a particular composition. Density is measured by a Densitometer (Density Meter DMA 38, Anton Paar) according to protocol 2 below. Measurement is conducted at 20 °C. Throughout (unless otherwise specified), density is expressed in gcm⁻³.

For the avoidance of doubt, term "density of the oil phase" refers to the density of the oil phase in isolation (i.e. not the density when present in an emulsion).

Preferably, the density of the oil phase is at least 1.00 gcm⁻³. More preferably, the density of the oil phase is at least 1.01 gcm⁻³. More preferably, the density of the oil phase is at least 1.02 gcm⁻³. More preferably, the density of the oil phase is at least 1.05 gcm⁻³.

Preferably, the density of the oil phase is below 1.045 gcm⁻³. More preferably, the density of the oil phase is below 1.04 gcm⁻³. More preferably, the density of the oil phase is below 1.035 gcm⁻³. More preferably, the density of the oil phase is below 1.03 gcm⁻³. More preferably, the density of the oil phase is below 1.025 gcm⁻³. More preferably, the density of the oil phase is below 1.02 gcm⁻³.

Preferably, the density is in a range between any of the preferred limits referred to above. More preferably, the density is between 0.99 and 1.04 gcm⁻³. More preferably, the density is between 1.00 and 1.05 gcm⁻³. More preferably, the density is between 1.00 and 1.04 gcm⁻³. More preferably, the density is between 0.99 and 1.02 gcm⁻³. More preferably, the density is between 1.00 and 1.02 gcm⁻³.

The skilled person will appreciate that in a multi-component system such as the oil phase of the invention, it is not always possible to predict the viscosity and density based on the identity of the components. A degree of routine trial and error will be required. Detailed procedures for the determination of viscosity and density are given in examples 1 and 2 respectively.

The skilled person will moreover appreciate that although the properties discussed above relate to those of the isolated oil phase, in practice it may be unnecessary or undesirable to prepare the isolated oil phase; it may be more convenient to prepare an emulsion comprising such an oil phase.

### Beverage Emulsions

The oil phases of the invention as described above, according to a further embodiment of the invention, are combined with an aqueous phase and pectin to give a beverage emulsion.

The term "emulsion" as used herein refers to a mixture of two immiscible (unblendable) substances. One substance (the dispersed phase) is dispersed in the other (the continuous phase).

Preferably, the aqueous phase is the continuous phase, and the oil phase is the dispersed phase; that is, the emulsion is an oil-in-water emulsion.

### Aqueous Phase

As used herein, the term "aqueous phase" refers to a water-based composition which is substantially immiscible with the oil phase when present as the continuous component of a beverage emulsion.of the invention.

The aqueous phase may contain one or more ingredients customary in the production of beverage emulsions. Preferably, the aqueous phase may comprise one or more of the following:
sweetners such as sugars, low calorie sweetners, and reduced calorie sweetners;
sugars including sucrose;
low calorie sweeteners including acesulfame K, alitame, aspartame, cyclamate, neohesperidin dihydrochalcone, tagatose, neotame, saccharin, stevioside, and sucralose;
reduced calorie sweeteners including erythritol, hydrogenated starch hydrolysates and maltitol syrup, isomalt, maltitol, lactitol, sorbitol and mannitol, xylitol, crystalline fructose, high-fructose corn syrup, isomaltulose, trehalose, fructooligosaccharides and polydextrose (such as Litesse®);
water soluble flavourings;
water soluble colourings;
caffeine;
acids including citric acid, malic acid and phosphoric acid, and the food acceptable salts thereof;
water soluble preservatives including sorbic acid, benzoic acid and the food acceptable salts thereof, especially the sodium and potassium salts
additional emulsifiers including gum arabic, modified starch, xanthan gum, lecithin and other polysaccharides.

Preferably, the aqueous phase comprises citric acid. More preferably, the aqueous phase comprises citric acid in an amount of between 0.1 % w/w and 0.5 % w/w based on the weight of the emulsion.

Preferably, the aqueous phase comprises sodium benzoate. More preferably, the aqueous phase comprises sodium benzoate in an amount of between 0.05 % w/w and 0.1 % w/w based on the weight of the emulsion.

In an alternative preferred embodiment, the aqueous phase comprises both sodium benzoate and potassium sorbate in a combined amount of between 0.05 % w/w and 0.18 % w/w based on the weight of the emulsion.

Preferably, the pH of the aqueous phase is between 1 and 7. More preferably, the pH of the aqueous phase is between 2.5 and 4. More preferably, the pH of the aqueous phase is between 3.2 and 3.8.

Preferably, the aqueous phase is present in an amount of from 70 to 96 % w/w based on the weight of the beverage emulsion. More preferably, the aqueous phase is present in an amount of from 80 to 93 % w/w based on the weight of the beverage emulsion. More preferably, the aqueous phase is present in an amount of from 85 to 92 % w/w based on the weight of the beverage emulsion. More preferably, the aqueous phase is present in an amount of from 86 to 90 % w/w based on the weight of the beverage emulsion.

Preferably, the oil phase is present in an amount of from 4 to 30 % w/w based on the weight of the beverage emulsion. More preferably, the oil phase is present in an amount of from 7 to 20 % w/w based on the weight of the beverage emulsion. More preferably, the oil phase is present in an amount of from 8 to 15 % w/w based on the weight of the beverage emulsion. More preferably, the oil phase is present in an amount of from 10 to 14 % w/w based on the weight of the beverage emulsion.

### Pectin

The aqueous phase of the emulsions of the invention comprises at least a pectin. The term "pectin" as used herein, unless otherwise specified, may refer to pectin of one specific origin or more than one origin.

Pectin is a structural polysaccharide, a polymeric carbohydrate of a high molecular weight, commonly found in the form of protopectin in plant cell walls. Pectin has an EU-number E 440 and US FDA reference 184.1588 (GRAS). Pectin molecules typically have a molecular weight of up, to 150,000 and a degree of polymerisation of up to 800 units. Pectin has an important influence on plant cells, since it is protopectin and cellulose that form the structure of the cell walls.

The backbone of pectin comprises α-1-4 linked galacturonic acid residues which are interrupted with a small number of 1,2 linked α-L-rhamnose units. In addition, pectin comprises highly branched regions with an almost alternating rhamno-galacturonan chain. These highly branched regions also contain other sugar units (such as D-galactose, L-arabinose and xylose) attached by glycosidic linkages to the C3 or C4 atoms of the rhamnose units or the C2 or C3 atoms of the galacturonic acid units. The long chains of α-1-4 linked galacturonic acid residues are commonly referred to as "smooth" regions, whereas the highly branched regions are commonly referred to as the "hairy regions".

Preferably, the pectin used in the emulsion of the invention has a galacturonic acid content of between 50 and 85 %. More preferably, the pectin has a galacturonic acid content of between 65 and 80 %.

Commercial pectin is commonly derived from the peel of citrus fruits (lemon, lime, orange and grapefruit), or from apple pomace, all of which releasing pectin of superior quality for the purposes of gel formation.

Sugar beet pectin is extracted from sugar beet pulp subsequent to sugar extraction. It is generally considered inferior in terms of gelation properties when compared with citrus or other pectins.

Various chemically or enzymatically modified pectins are also contemplated within the term "pectin". For example, the pectin may be a high ester pectin. "High ester pectin" refers to a pectin in which the degree of esterification or DE is greater than or equal to 50 %. High ester pectins are also known as "HE pectin".

Alternatively, the pectin may be a low ester pectin. "Low ester pectin" refers to a pectin in which the degree of esterification or DE is less than 50 %. Low ester pectins are also known as "LE pectin".

Preferably, the pectin of the composition has a degree of esterification (DE) of between 55 and 60 %.

Preferably, the pectin of the composition has a degree of acetylation of between 5 and 50 %. More preferably, the pectin of the composition has a degree of acetylation of between 10 and 50 %. More preferably, the pectin of the composition has a degree of acetylation of between 10 and 40 %. Most preferably, the degree of acetylation is between 15 and 35 %.

Preferably, the pectin comprises at least sugar beet pectin. More preferably, the pectin consists essentially of sugar beet pectin. Still more preferably, the pectin consists essentially of sugar beet pectin as the sole emulsifier.

Preferably, the average molecular weight of the pectin is above 10 kDa. More preferably, the average molecular weight of the pectin is above 15 kDa. Still more preferably, the average molecular weight of the pectin is above 20 kDa. Still more preferably, the average molecular weight of the pectin is above 25 kDa. Still more preferably, the average molecular weight of the pectin is above 30 kDa. Still more preferably, the average molecular weight of the pectin is above 35 kDa. Still more preferably, the average molecular weight of the pectin is above 40 kDa. Most preferably, the average molecular weight of the pectin is above 45 kDa.

Preferably, the average molecular weight of the pectin is below 100 kDa. More preferably, the average molecular weight of the pectin is below 90 kDa. Still more preferably, the average molecular weight of the pectin is below 80 kDa. Still more preferably, the average molecular weight of the pectin is below 70 kDa. Most preferably, the average molecular weight of the pectin is below 65 kDa.

Preferably, the average molecular weight of the pectin is in a range between any of the preferred limits referred to above. More preferably, the average molecular weight of the pectin is in a range between 15 and 100 kDa. Still more preferably, the average molecular weight of the pectin is in a range between 30 and 100 kDa. Still more preferably, the average molecular weight of the pectin is in a range between 15 and 70 kDa. Still more preferably, the average molecular weight of the pectin is between 10 and 60 kDa. Still more preferably, the average molecular weight of the pectin is in a range between 15 and 100 kDa. Still more preferably, the average molecular weight of the pectin is in a range between 30 and 70 kDa. Still more preferably, the average molecular weight of the pectin is between 45 and 70 kDa. Still more preferably, the average molecular weight is between 30 and 65 kDa. Most preferably, the average molecular weight is between 45 and 65 kDa.

Preferably, the beverage emulsion comprises between 0.1 and 5.0 % w/w of pectin based on the total weight of the emulsion. More preferably, the beverage emulsion comprises between 0.1 and 2.5 % w/w of pectin based on the total weight of the emulsion. More preferably, the beverage emulsion comprises between 0.5 and 2.5 % w/w of pectin based on the total weight of the emulsion. More preferably, the beverage emulsion comprises between 1.2 and 2.5 % w/w of pectin based on the total weight of the emulsion. Most preferably, the beverage emulsion comprises between 1.2 and 1.9 % w/w of pectin based on the total weight of the emulsion.

### Stability

Preferably, the beverage emulsions of the invention are stable upon storage. In this context, "stable" means that the stored emulsion passes the "ringing test" described by Tan and Holmes, "Stability of beverage flavour emulsions", Perfumer and Flavourist 1988, 13, 23-41 (see protocol 3).

### Preparation of Beverage Emulsions

The beverage emulsions of the invention are suitably prepared by a two step process comprising:
i. bringing into association the oil phase and the aqueous phase;
ii. homogenising the mixture.

The step of bringing the oil phase and aqueous phase may be accomplished in any one of a number of ways. For example, the oil phase may be added to the aqueous phase; alternatively, the aqueous phase may be added to the oil phase. However, it is not necessary to prepare the oil phase or aqueous phase prior to bringing them into association, and in an alternative process the constituents of the aqueous phase and the constituents of the oil phase may be added together in any convenient order.

In one preferred embodiment of the invention, however, the oil phase and the aqueous phase are prepared separately before being combined.

Homogenising, as used herein, refers to a process whereby the aqueous phase and oil phase are transformed into a stable emulsion of oil phase particles within the continuous water phase.

Preferably, the homogenising process is conducted in two steps, namely preliminary homogenisation and final homogenisation. Preferably, final homogenisation is conducted after preliminary homogenisation.

Preliminary homogenisation is a process step which results in the oil phase particles obtaining a particle size of from 5 to 20 µm, more preferably from 5 to 10 µm.

Preliminary homogenisation may be achieved in a variety of ways known to those in the art. Suitable methods for achieving preliminary homogenisation include the use of a high speed mixer, a hydroshear mixer, a homomixer, or single pass homogenisation at a pressure of between 0 to 5 MPa (0 and 50 bar).

Final homogenisation is a process step which results in the oil phase particles obtaining a particle size of between 0.3 to 2.0 µm, preferably between 0.5 and 1.0 µm.

Final homogenisation may be achieved in a variety of ways known to those in the art Preferably, the emulsion obtained as a result of preliminary homogenisation above is passed through a homogeniser at a pressure of between 15 to 30 MPa (150 to 300 bar), more preferably at a pressure of between 20 to 25 MPa (200 and 250 bar). Preferably, said emulsion is passed through the homogeniser more than once. More preferably, said emulsion is passed through the homogeniser 2 or 3 times. Most preferably, said emulsion is passed through the homogeniser 2 times.

### Finished Beverages

The beverage emulsions of the present invention may be combined with water and one or more ingredients customary in the art to give a beverage in a form suitable for consumption ("finished beverage").

Preferably, the finished beverages comprise between 0.01 and 1.00 % w/w of the beverage emulsions of the invention based on the weight of the finished beverage. More preferably, the finished beverages comprise between 0.02 and 0.40 % w/w of the beverage emulsions of the invention based on the weight of the finished beverage. More preferably, the finished beverages comprise between 0.10 and 0.40 % w/w of the beverage emulsions of the invention based on the weight of the finished beverage. More preferably, the finished beverages comprise between 0.10 and 0.20 % w/w of the beverage emulsions of the invention based on the weight of the finished beverage.

The finished beverage may be still. Alternatively, the finished beverage may be carbonated, Suitably, the finished beverage is carbonated in the range of 0 to 4.5 % v/v.

The finished beverage may contain alcohol. Preferably, the finished beverage contains alcohol in an amount of between 0.01 and 15 % v/v based on the volume of the finished beverage.

Preferably, the finished beverage is between 0 and 15 °Brix.

Preferably, the finished beverage may comprise one or more of the following (in addition to those components present in the beverage emulsion):
sugars including sucrose;
low calorie sweeteners including acesulfame K, alitame, aspartame, cyclamate, neohesperidin dihydrochalcone, tagatose, neotame, saccharin, stevioside, and sucralose;
reduced calorie sweeteners including erythritol, hydrogenated starch hydrolysates and maltitol syrup, isomalt, maltitol, lactitol, sorbitol and mannitol, xylitol, crystalline fructose, high-fructose corn syrup, isomaltulose, trehalose, fructooligosaccharides and polydextrose (such as Litesse®);;
water soluble flavourings;
water soluble colourings;
caffeine;
fruit juices including guava, kiwi, peach, mango, papaya, pineapple, banana, strawberry, raspberry, blueberry, orange, grapefruit, tangerine, lemon, lime, lemon-lime and apple;
acids including citric acid, malic acid and phosphoric acid, and the food acceptable salts thereof;
water soluble preservatives including sorbic acid, benzoic acid and the food acceptable salts thereof, especially the sodium and potassium salts
additional emulsifiers including gum arabic, modified starch, xanthan gum, lecithin and other polysaccharides.

Preferably, the finished beverage comprises citric acid. More preferably, the finished beverage comprises citric acid in an amount of between 0.1 % w/w and 0.5 % w/w based on the weight of finished beverage.

Preferably, the finished beverage comprises sodium benzoate. More preferably, the finished beverage comprises sodium benzoate in an amount of up to 350 ppm.

In an alternative preferred embodiment, the finished beverage comprises both sodium benzoate and potassium sorbate in a combined amount of up to 350 ppm.

The finished beverages may suitably be prepared according to the postmix or premix methods.

After formulation, the finished beverage may suitably be pasteurized using a method known in the art. For example, the finished beverage may be treated at between 85 and 87 °C for between 20 and 30 seconds.

The finished beverages thus produced exhibit excellent, stable levels of cloudiness. Additionally, they are stable for extended periods with no evidence of ringing or sedimentation.

The present invention will now be described in further detail in the following examples.

### Examples

### Example 1

An orange emulsion is prepared using the ingredient formulation shown in table 1:

**Table 1.**

| **Ingredient** | **Phase** | **% w/w** |
|---|---|---|
| Treated water | AQUEOUS PHASE | 83.0 |
| Sugar beet pectin | | 1.8 |
| Sodium benzoate | | 0.1 |
| Citric acid | | 0.1 |
| Sunset yellow | | 1.0 |
| Cold pressed orange oil | OIL PHASE | 1.9 |
| Ester gum | | 1.5 |
| Medium chain triglyceride | | 1.0 |
| Orange oil flavour | | 1.9 |
| Sucrose acetate isobutyrate | | 7.7 |

The ingredients are mixed together in the order in which they appear in table 1, and are subsequently homogenised 2 x 25 MPa (2 x 250 bar) using a single stage homogeniser (Rannie and Gaulin) to produce a beverage emulsion with an average particle size of 1 micrometer or less.

### Example 2

The orange emulsion of Example 1 is combined with further ingredients in the quantities and order indicated in table 2 to provide a syrup, which further diluted into a carbonated finished drink.

**Table 2**

| **Ingredient** | **% w/w** |
|---|---|
| Sugar | 12.3 |
| Sodium benzoate | 0.013 |
| Citric acid | 0.28 |
| Orange emulsion of example 1 | 0.1 |
| Carbonated (7 gl⁻¹) water | 83.3 |

### Example 3

Using the same aqueous phase and preparation process as given in Example 1, compositions were prepared comprising oil phase according to table 3. Finished drinks were then prepared as in Example 2. The finished drinks were assessed for stability on storage, and the appearance of neck ring or sedimentation was noted.
14% oil content / 1.8% pectin

**Table 3 *: Sedimentation of oil phase is observed on storage Example 4**

| Oil phase density | % flavour oil | % weighting agent | in oil phase | Oil phase viscosity (cp) | Drink stability |
|---|---|---|---|---|---|
| | | EG | SAIB | | |
| 0.85 | 97.61 | 2.39 | 0 | 3.5 | ring |
| 0.86 | 92.28 | 7.72 | 0 | 4.5 | ring |
| 0.90 | 72.15 | 27.85 | 0 | 7 | ring |
| 0.92 | 62.73 | 37.27 | 0 | 15 | ring |
| 0.94 | 53.72 | 46.28 | 0 | 27 | ring |
| 0.96 | 51.49 | 48.51 | 0 | 12 | ring |
| 0.96 | 49.49 | 0 | 50.51 | 12 | ring |
| 0.97 | 50.3 | 49.7 | 0 | 157.5 | ring |
| 0.97 | 48 | 52 | 0 | 159.5 | ring |
| 0.97 | 47.46 | 0 | 52.54 | 8.5 | ring |
| 0.98 | 49 | 51 | 0 | 296.5 | ring |
| 0.98 | 44 | 56 | 0 | 172 | ring |
| 0.98 | 43.35 | 0 | 56.65 | 10 | ring |
| 0.99 | 39.32 | 0 | 60.68 | 13 | ring |
| 1.00 | 30 | 70 | 0 | 1418 | ring |
| 1.00 | 52 | 48 | 0 | 1165 | ring |
| 1.00 | 35.39 | 0 | 64.61 | 16 | OK |
| 1.00 | 30.21 | 51.97 | 17.82 | 154 | OK |
| 1.01 | 31.54 | 0 | 68.46 | 32 | OK |
| 1.02 | 27.8 | 0 | 72.2 | 46 | OK |
| 1.03 | 24.11 | 0 | 75.89 | 69 | OK |
| 1.04 | 20.46 | 0 | 79.54 | 113 | OK |
| 1.05 | 16.95 | 0 | 83.05 | 194 | OK* |
| 1.06 | 13.45 | 0 | 86.55 | 344 | OK* |

An lemon emulsion is prepared using the ingredient formulation table 4:

**Table 4.**

| **Ingredient** | **Phase** | **% w/w** |
|---|---|---|
| Treated water | AQUEOUS PHASE | 87.7 |
| Sugar beet pectin | | 1.8 |
| Sodium benzoate | | 0.1 |
| Citric acid | | 0.1 |
| Citral | OIL PHASE | 0.02 |
| Lemon oil Italy Winterl | | 1.9 |
| Lemon flavour oil | | 1.6 |
| Ester gum | | 2.0 |
| Antioxidant | | 0.03 |
| Sucrose acetate isobutyrate | | 4.75 |

The ingredients are combined in the amounts and order shown in table 4. The mixture is homogenised 2 x 25 MPa (2 x 250 bar) using a single stage homogeniser (Rennie and Gaulin) to produce a beverage emulsion with an average particle size of 1 micrometer or less.

### Example 5

The lemon emulsion of example 4 is then combined with the further ingredients in the order and quantities specified in table 5 to provide a syrup which is further diluted into a finished carbonated drink.

**Table 5**

| **Ingredient** | **% w/w** |
|---|---|
| Sugar | 9.0 |
| Sodium benzoate | 0.013 |
| Citric acid | 0.25 |
| Quinoline yellow | 0.0008 |
| Lemon emulsion of Example 3 | 0.2 |
| Carbonated (7gl⁻¹) water | 90.53 |

### Example 6

Oil phases V00 to V05 were prepared according to table 6. These were formulated with aqueous phases containing sugar beet pectin to give emulsions having the following characteristics:
***Syrup composition***
   Brix: 50.8 °B
   Acidity: 1,48% W/W
   Density of oil phase: 1.00 gcm⁻³
   Sugar beet pectin emulsion added after syrup acidification

Data in table 6 clearly that flakes formation is prevented by optimizing estergum (EG) content in the oil blend. Yet, cutting down EG in the oil blend gives rise to significant turbidity reduction.

### Oil blend composition of the different emulsions

**Table 6**

| **Ingredients** | **V00** Oil content(%) | **V01** Oil content(%) | **V02** Oil content(%) | **V03** Oil content(%) | **V04** Oil content(%) | **V05** Oil content(%) |
|---|---|---|---|---|---|---|
| Orange Oil blend | 26.5 | 29.5 | 29.5 | 27.5 | 25.2 | 26.5 |
| Anti-Oxidant | 0.5 | 0.5 | 18.4 | 0.5 | 0.45 | 0.5 |
| (Etser Gum 8BG) | 46.3 | 25.8 | 0.5 | 10.3 | 0 | 33.2 |
| SAIB | 26.7 | 44.2 | 51.6 | 51.9 | 63.0 | 39.8 |
| Vegetable oil | 0 | 0 | 0 | 6.9 | 11.35 | 0 |
| ***Flakes formation*** | ***Yes*** | No | No | No | No | No |
| ***Turbidity (NTU)*** | ***520*** | 360 | 358 | 340 | 392 | 401 |

### Protocol 1

The viscosity of the oil phase is measured by rotational viscosimetry (Viscometer Model LVF, Brookfield, USA). Samples were placed in a thermostated MEASUREMENT (20°C) room. The inner cylinder was driven at a constant torque or stress and the resultant strain was measured as the speed at which the inner cylinder rotated. This speed is governed by the viscosity of the fluid between the plates so that the faster it spins at a given torque, the lower the viscosity of the liquid being analyzed. Viscosity was computed from the shear stress/strain record according to the dimensional parameters of the inner cylinder. The oil phase viscosity was measured with a speed of 30 RPM at 20°C using a LV spindle (LV 2).

### Protocol 2

The density of the oil phase is measured by a Densitometer (Density Meter DMA 38, Anton Paar^{™}). The sample to be analysed is pomped in a glass U-tube, which is forced to oscillate sinusoidally by the application of an alternating mechanical force. The density of a fluid is determined by measuring the resonant frequency of the U-tube and relating it to the density using an appropriate mathematical equation. The instrument is calibrated with two fluids of accurately known density.

### Protocol 3

The "*ringing test*" is the most popular method to evaluate the stability of beverage flavor emulsions in soft drink. It is a test in which bottles of soft drink containing the beverage emulsion are held in an upright position at 4, 20 and 35 °C +/- 2 for visualization of ringing or sedimentation during a period of at least 2 moths. Ringing test is performed as described by Tan and Holmes (1988): Stability of beverage flavour emulsions, Perfumer and Flavourist, 13: 23-41.

All publications mentioned in the above specification are herein incorporated by reference. Various modifications and variations of the described methods and system of the invention will be apparent to those skilled in the art without departing from the scope and spirit of the invention. Although the invention has been described in connection with specific preferred embodiments, it should be understood that the invention as claimed should not be unduly limited to such specific embodiments. Indeed, various modifications of the described modes for carrying out the invention which are obvious to those skilled in chemistry or related fields are intended to be within the scope of the following claims.

## Claims

1. An oil phase for the preparation of a stable beverage emulsion, said oil phase having a density of between 0.99 and 1.05 gcm⁻³ **characterised in that** said oil phase has a viscosity of between 10 and 1500 cP at 20 °C.

2. An oil phase according to claim 1 having a density of between 1.00 and 1.04 gcm⁻³ at 20 °C.

3. An oil phase according to claim 1 having a density of between 1.00 and 1.02 gcm⁻³ at 20°C.

4. An oil phase according to any preceding claim having a viscosity of between 50 and 1000 cP at 20°C.

5. An oil phase according to any preceding claim comprising one or more weighting agents.

6. An oil phase according to claim 5 wherein a or the weighting agent is sucrose acetate isobutyrate.

7. An oil phase according to claim 5 or 6 wherein a or the weighting agent is ester gum.

8. An oil phase according to claim 7 wherein the weighting agents include sucrose acetate isobutyrate and ester gum and the ester gum is present in an amount of between 20 and 50 % w/w based on the weight of the oil phase.

9. An oil phase according to claim 7 wherein the weighting agents include sucrose acetate isobutyrate and ester gum and the ratio of sucrose acetate isobutyrate to ester gum in the oil phase is between 10:1 and 1:1 by weight.

10. A beverage emulsion comprising:
an oil phase as claimed in any one of claims 1 to 9;
an aqueous phase; and
pectin.

11. A beverage emulsion according to claim 10 comprising of between 4 and 30 % w/w of oil phase based on the total weight of the emulsion, comprising between 70 and 96 % w/w of aqueous phase based on the total weight of the emulsion, and comprising between 0.5 % and 2.5 % w/w pectin based on the total weight of the emulsion.

12. A finished beverage comprising a beverage emulsion as claimed in claim 10 or 11.

13. A process for the preparation of a beverage emulsion as claimed in claim 10 or 11 comprising the steps of:
bringing into association the constituents of the oil phase and the aqueous phase to form a mixture; and
homogenising the said mixture.

14. A process according to claim 13 wherein homogenising comprises steps of:
preliminary homogenisation to give an average oil phase particle size of between 5 and 20 µm; and
final homogenisation to give an average oil phase particle size of between 0.3 and 2.0 µm.

15. The use of sugar beet pectin as an emulsifier in a beverage emulsion comprising an oil phase as claimed in any one of claims 1 to 9 and an aqueous phase.

## Patentansprüche

1. Ölphase für die Herstellung einer stabilen Getränkeemulslon, wobei die Ölphase eine Dichte von zwischen 0,99 und 1,05 gcm⁻³ hat, **dadurch gekennzeichnet, dass** die Ölphase eine Viskosität von zwischen 10 und 1500 cP bei 20°C hat.

2. Ölphase nach Anspruch 1 mit einer Dichte zwischen 1,00 und 1,04 gcm⁻³ bei 20°C.

3. Ölphase nach Anspruch 1 mit einer Dichte zwischen 1,00 und 1,02 gcm⁻³ bei 20°C.

4. Ölphase nach einem der vorangegangenen Ansprüche mit einer Viskosität zwischen 50 und 1000 cP bei 20°C.

5. Ölphase nach einem der vorangegangenen Ansprüche, welche ein oder mehrere Beschwerungsmlttel umfasst.

6. Ölphase nach Anspruch 5, wobei ein oder das Beschwerungsmittel Saccharoseacetatlsobutyrat ist.

7. Ölphase nach Anspruch 5 oder 6, wobei ein oder das Beschwerungsmittel Estergummi ist.

8. Ölphase nach Anspruch 7, wobei die Beschwerungsmittel Sacchamseacetatisobutyrat und Estergummi enthalten und der Estergummi In einer Menge zwischen 20 und 50% W/W. basierend auf dem Gewicht der Ölphase, vorliegt.

9. Ölphase nach Anspruch 7, wobei die Beschwerungsmittel Saccharoseacetatisobutyrat und Estergummi enthalten und das Verhältnis von Saccharoseacetatisobutyrat zu Estergummi in der Ölphase zwischen 10:1 und 1:1, bezogen auf das Gewicht, beträgt.

10. Getränkeemulsion, welche folgendes umfasst:
eine Ölphase nach einem der Ansprüche 1 bis 9,
eine wässrige Phase und
Pektin.

11. Getränkeemulsion nach Anspruch 10, weiche zwischen 4 und 30% W/W Ölphase, basierend auf dem Gesamtgewicht der Emulsion, umfasst, zwischen 70 und 96% W/W an wässriger Phase, basierend auf dem Gesamtgewicht der Emulsion, umfasst und zwischen 0,5% und 2,5% W/W Pektin, basierend auf dem Gesamtgewicht der Emulsion, umfasst.

12. Fertiges Getränk, welches eine Getränkeemulsion nach Anspruch 10 oder 11 umfasst.

13. Verfahren zur Herstellung einer Getränkeemulsion nach Anspruch 10 oder 11, welches die folgenden Stufen umfasst;
Vereinigen der Bestandteile der Ölphase und der wässrigen Phase unter Bildung eines Gemischs und
Homogenisieren des Gemischs,

14. Verfahren nach Anspruch 13, wobei das Homogenisieren die folgenden Stufen umfasst: vorbereitenden Homogenisieren unter Erhalt einer mittleren Teilchengröße der Ölphase von zwischen 5 und 20 µm und
abschließendes Homogenisieren unter Erhalt einer mittleren Teilchengröße der Ölphase von zwischen 0,3 und 2,0 µm.

15. Verwendung von Zuckerrübenpektln als Emulgiermittel In einer Getränkeemulsion, welche eine Ölphase nach einem der Ansprüche 1 bis 9 und eine wässrige Phase umfasst.

## Revendications

1. Phase huileuse pour la préparation d'une émulsion de boisson stable, ladite phase huileuse ayant une masse volumique comprise entre 0,99 et 1,05 g.cm⁻³, **caractérisée en ce que** ladite phase huileuse a une viscosité comprise entre 10 et 1 500 cP à 20°C.

2. Phase huileuse selon la revendication 1, ayant une masse volumique comprise entre 1,00 et 1,04 g.cm⁻³ à 20 °C.

3. Phase huileuse selon la revendication 1, ayant une masse volumique comprise entre 1,00 et 1,02 g,cm⁻³ à 20°C.

4. Phase huileuse selon l'une quelconque des revendications précédentes, ayant une viscosité comprise entre 50 et 1 000 cP à 20°C.

5. Phase huileuse selon l'une quelconque des revendications précédentes, comprenant un ou plusieurs agents alourdissants.

6. Phase huileuse selon la revendication 5, dans laquelle un agent alourdissant ou l'agent alourdissant est l'acétate isobutyrate de saccharose.

7. Phase huileuse selon la revendication 5 ou 6, dans laquelle un agent alourdissant ou l'agent alourdissant est une gomme d'ester.

8. Phase huileuse selon la revendication 7, dans laquelle les agents alourdissants incluent l'acétate isobutyrate de saccharose et la gomme d'ester, et la gomme ester est présente dans une quantité comprise entre 20 et 50 % p/p par rapport au poids de la phase huileuse.

9. Phase huileuse selon la revendication 7, dans laquelle les agents alourdissants incluent l'acétate isobutyrate de saccharose et la gomme d'ester et le rapport entre l'acétate isobutyrate de saccharose et la gomme d'ester dans la phase huileuse est compris entre 10:1 et 1:1 en poids,

10. Emulsion de boisson comprenant :
une phase huileuse selon l'une quelconque des revendications 1 à 9 ;
une phase aqueuse ; et
de la pectine,

11. Emulsion de boisson selon la revendication 10, comprenant entre 4 et 30 % p/p de phase huileuse par rapport au poids total de l'émulsion, comprenant entre 70 et 96 % p/p de phase aqueuse par rapport au poids total de l'émulsion, et comprenant entre 0,5 % et 2,5 % p/p de pectine par rapport au poids total de l'émulsion.

12. Boisson finie comprenant une émulsion de boisson selon la revendication 10 ou 11.

13. Procédé de préparation d'une émulsion de boisson selon la revendication 10 ou 11, comprenant les étapes consistant à :
mette en association les constituants de la phase huileuse et de la phase aqueuse pour former un mélangé ; et
homogénéiser ledit mélange.

14. Procédé selon la revendication 13, dans lequel l'homogénéisation comprend les étapes suivantes :
homogénéisation préliminaire pour donner une taille moyenne de particule de phase huileuse comprise entre 5 et 20 µm ; et
homogénéisation finale pour donner une taille moyenne de particule de phase huileuse comprise entre 0,3 et 2,0 µm.

15. Utilisation de pectine de betterave sucrière en tant qu'émulsifiant dans une émulsion de boisson comprenant une phase huileuse telle que revendiquée dans l'une quelconque des revendications 1 à 9 et une phase aqueuse.
